# EUROPÄISCHE PATENTSCHRIFT

(11) **EP 1 566 587 B1**
(45) Veröffentlichungstag und Bekanntmachung des Hinweises auf die Patenterteilung: **07.06.2006**
(21) Anmeldenummer: 04003995.0
(22) Anmeldetag: 23.02.2004
(51) Int. Cl.: F16L 9/147, B32B 1/08, B29D 23/00

(54) **Diffusionsdichtes Kunststoffrohr**
Diffusion tight plastic tube
Tuyau en matière plastique, étanche à la diffusion

(43) Veröffentlichungstag der Anmeldung: 24.08.2005
(73) Patentinhaber: BRUGG Rohr AG, Holding, 5200 Brugg (CH)
(72) Erfinder: Bolli, Anja, 7078 Lenzerheide (CH); Rudi, Roberto, 5107 Schinznach-Dorf (CH); Oeschger, Alfred, 5276 Will (AG) (CH)

(56) Entgegenhaltungen:
- EP-A- 0 010 751
- EP-A- 0 897 788
- EP-A- 1 260 749
- CH-A- 674 763
- DE-C- 10 146 406
- DE-C- 19 953 737
- GB-A- 1 409 096
- US-A1- 2004 013 836

## Beschreibung

Die Erfindung betrifft ein wärmeisoliertes Leitungsrohr nach dem Oberbegriff des Anspruchs 1,sowie ein Verfahren zur Herstellung eines diffusionsdichten Kunststoffrohres nach dem Oberbegriff der Ansprüche 10 und 16.

Medientransportrohre aus Kunststoff haben im Vergleich zu Metallrohren den Nachteil, daß sie gegenüber Gasen mit kleinen Molekülen permeabel sind. Falls die Moleküle genügend klein sind, findet eine temperaturabhängige Permeation statt.

In wasserführenden, isolierten Leitungen mit einem Mediumrohr aus Kunststoff diffundiert bei Temperaturen über 70 °C Wasserdampf durch das Mediumrohr und gelangt in die Isolationsschicht. Feuchte Isolationsmaterialien verlieren drastisch an Isolationswert. Analog können Sauerstoffmoleküle mittels Permeation von außen nach innen in das durchfließende Wasser gelangen und dieses an Sauerstoff anreichern. Dies fördert bei Stahlteilen, z. B. bei Radiatoren im gleichen Rohrsystem, die Korrosion und führt außerdem zu einer vorzeitigen Alterung des Kunststoffrohres.

Bei wasserführenden, nicht isolierten Leitungen aus Kunststoff spielt die Permeation von Wasserdampf von innen nach außen keine bedeutende Rolle, hingegen wirkt sich die Permeation von Sauerstoffmolekülen von außen nach innen nachteilig aus.

Zur Behebung dieser Nachteile hat man bereits in die Wandung eines Kunststoffrohres eine Metallfolie eingebracht. Es hat sich jedoch gezeigt, daß bei wiederholten bedingten Expansions- und Kontraktionsbewegungen des Rohres durch betriebsbedingte Temperatur- und Druckwechsel die Gefahr der Delaminierung und Rissbildung der Metallfolie groß ist. Das Problem entsteht dadurch, daß die Metallfolie und die Kunststoffschichten unterschiedliche Ausdehnungskoeffizienten und Elastizitätsmodule haben.

Zur Lösung der genannten Probleme ist es aus der CH-A-674 763 bekannt, eine Permeationssperre vorzusehen, die aus einem auf dem Innenrohr aufliegenden, zusammendrückbaren Polstermaterial und einer nackten oder einer ein- oder beidseitig beschichteten Metallfolie besteht, die von einem Mediummantelrohr umgeben ist. Das Polstermaterial ist ein schraubenlinienförmig, mit überlappenden Bandkanten gewickeltes Polsterband aus einem mit einem Elastomer kaschierten gewobenen Polyamidband. Diese Lösung ist recht aufwendig und hat sich nicht durchsetzen können.

Aus der GB-A-1 409 096 ist eine flexible Leitung bekannt, welche eine rohrförmige gewellte metallische Auskleidung aufweist. Die gewellte metallische Auskleidung ist in einer elastomeren Schicht eingebettet. Die mit der elastomeren Schicht versehene Auskleidung dient als Innenrohr der flexiblen Leitung, wobei das Innenrohr von zwei schraubenlinienförmig gewickelten Drahtlagen umgeben ist. Die äußere Drahtlage ist von einem Außenmantel aus elastomerem Material umgeben.

Der vorliegenden Erfindung liegt die Aufgabe zugrunde, Kunststoffrohre wasserdampfdiffusionsdicht auszubilden, ohne daß die Gefahr eines Undichtwerdens der Permeationssperrschicht besteht. Insbesondere soll die Permeationssperrschicht gesichert sein gegen axiale und radiale Kräfte.

Diese Aufgabe wird durch die im Kennzeichen der Ansprüche 1, 10 und 16 gelöst.

Weitere vorteilhafte Ausgestaltungen der Erfindung sind in den Unteransprüchen erfaßt.

Der wesentliche Vorteil der Erfindung ist darin zu sehen, daß die temperatur- bzw. druckbedingten Dehnungen der Metallfolie durch ring- oder schraubenlinienförmige Wellung der Metallfolie kompensiert werden. Wesentlich dabei ist, daß die erste und die zweite Kunststoffschicht bei Betriebstemperatur des Kunststoffrohres eine Verformung der gewellten Metallfolie zulassen.

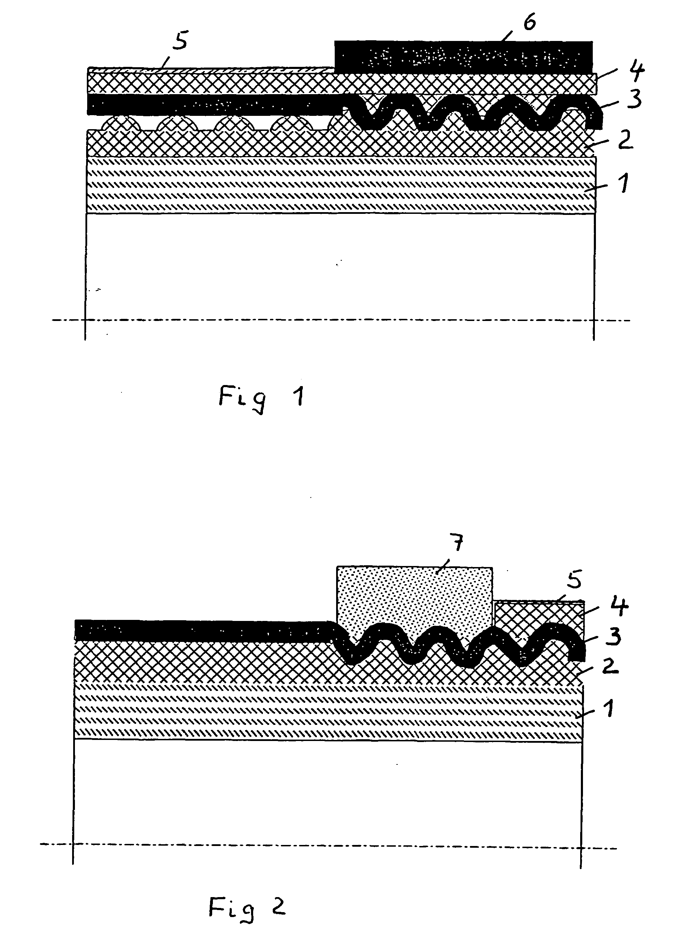

Die Erfindung ist anhand der in den Figuren 1 bis 4 schematisch dargestellten Ausführungsbeispiele näher erläutert.

In den Figuren 1 bis 3 ist ein Schnitt durch die Wandung des erfindungsgemäßen Kunststoffrohres dargestellt, wobei in der linken Hälfte der Zustand während der Fertigung und in der rechten Hälfte das fertige Rohr gezeigt ist.

In den Figuren ist das Innenrohr mit 1, eine erste Kunststoffschicht mit 2, die Metallfolie mit 3 und eine zweite Kunststoffschicht mit 4 bezeichnet. Das Innenrohr 1 ist ein Kunststoffrohr vorzugsweise aus Polyethylen.

Die erste sowie die zweite Kunststoffschicht (2 und 4) sind Schichten aus Polyurethan und zwar vorzugsweise aus duroplastischem Polyurethan.

Die Metallfolie 3 ist vorzugsweise eine Aluminiumfolie, die leicht verformbar ist.

Die Figur 1 zeigt schematisch eine erste Variante zur Herstellung des erfindungsgemäßen Rohres.

Auf das Innenrohr 1 wird zunächst eine erste Schicht 2 aus Polyurethan pulsierend aufgebracht, wobei sich eine wellenförmige Kontur der ersten Schicht ergibt. Auf diese wellenförmige Kontur wird die Aluminiumfolie 3 längseinlaufend und auf die Aluminiumfolie 3 die zweite Kunststoffschicht 4 aus Polyurethan aufgebracht. Auf die zweite Kunststoffschicht wird eine dünne Folie 5 längseinlaufend oder schraubenlinienförmig aufgelegt.

Mittels eines speziellen Werkzeuges 6 wird von außen Druck und Wärme aufgebracht, wodurch die Aluminiumfolie 3 in wellenförmiger Kontur in die erste Kunststoffschicht 2 eingeformt wird. Gleichzeitig wird die zweite Kunststoffschicht 4 in die wellenförmige Kontur der Aluminiumfolie geformt.

Die Figur 2 zeigt eine weitere Variante zur Herstellung des erfindungsgemäßen Rohres.

Hier wird zunächst auf das Innenrohr 1 die erste Polyurethanschicht 2 aufgebracht und die Aluminiumfolie 3 längseinlaufend auf die Schicht 2 aufgelegt.

Mitels mitlaufender Backen 7, welche eine Wellkontur an ihrer dem Rohr zugekehrten Oberfläche aufweisen, wird die Aluminumfolie 3 in die noch weiche erste Schicht eingeformt. Auf die gewellte Aluminiumfolie 3 wird dann die zweite Polyurethanschicht 4 aufgebracht.

Eine Vorrichtung zur Herstellung wellenförmiger Oberflüchenkonturen ist aus der EP-PS 0897788 bekannt.

Auf die Schicht 4 wird dann wie bei Figur 1 eine Polyesterfolie 5 aufgelegt.

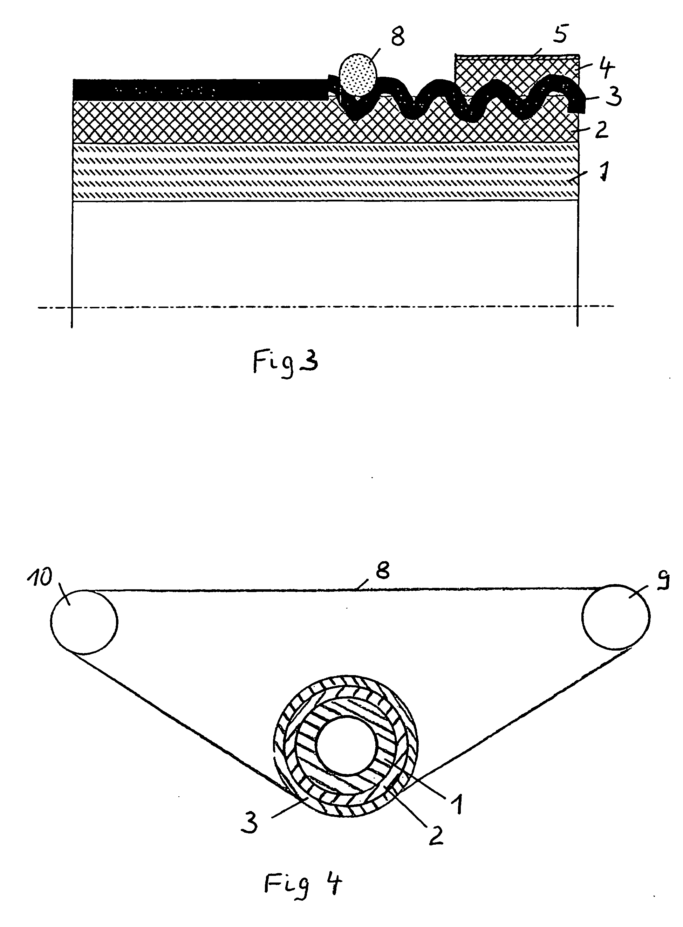

Eine weitere Variante zur Herstellung des erfindungsgemäßen Rohres ist in den Figuren 3 und 4 dargestellt.

Auf das Innenrohr 1 werden die erste Polyurethanschicht 2 sowie die Aluminiumfolie 3 aufgebracht.

Mittels eines fadenartigen Werkzeugs 8 wird die Aluminiumfolie 3 in die darunterliegende Schicht 2 eingeformt und anschließend die zweite Schicht 4 aufgebracht, welche die wellenartige Kontur ausfüllt. Anschließend wird eine Polyesterfolie 5 auf die Schicht 4 aufgelegt.

Die Vorrichtung, welche mit dem Faden die Wellung erzeugt, ist in der Figur 4 schematisch dargestellt.

Die Vorrichtung besteht aus zwei Rollen 9 und 10, um welche der endlose Faden 8 geführt ist. Die Vorrichtung umläuft das Rohr und erzeugt eine schraubenlinienförmige Wellung, da das Rohr kontinuierlich die Fertigungsanlage durchläuft. Die Rollen 9 und 10 können in einem nicht näher dargestellten rohrförmigen, umlaufenden Gehäuse angeordnet sein.

Die Maße eines bevorzugten Kunststoffrohres gemäß der Lehre der Erfindung betragen:

| | | |
|---|---|---|
| Kunststoffinnenrohr 1: | Innendurchmesser = | 40,8 mm |
| | Außendurchmesser = | 50,0 mm |
| Erste Polyurethanschicht 2: | Wanddicke = | 0,5 - 0,6 mm |
| Aluminiumfolie 3: | Wanddicke 30 - 60 µm | |
| | Dehnfähigkeit 20 % | |
| Zweite Polyurethanschicht 4: | Wanddicke = | 0,1 mm |
| Polyesterfolie 5: | Wanddicke = | 25 - 50 µm |

Die erste Polyurethanschicht 2 wird durch Kaltextrusion aufgebracht und anschließend durch gezielte Wärmebehandlung so ausgehärtet, daß sie nicht mehr fließen kann, aber ihre Klebkraft und Verformbarkeit beibehält.

Die Aluminiumfolie 3 wird längseinlaufend auf die Schicht 2 aufgelegt und mit dieser verklebt. Vorteilhafterweise wird die Aluminiumfolie 3 mit überlappenden Bandkanten auf die Kunststoffschicht 2 aufgelegt. Die Bandkanten werden miteinander verklebt. Die zweite Polyurethanschicht 4 wird ebenfalls durch Kaltextrusion aufgebracht.

Das Kunststoffrohr 1 mit den aufgebrachten Schichten 2, 3 und 4 wird dann einer Wärmebehandlung unterzogen, bei welcher die Schichten 2 und 4 ausgehärtet werden, wobei aber eine gewisse Elastizität der Schichten 2 und 4 erhalten bleibt.

Die Polyesterfolie 5 hat die Aufgabe, die Schichten gegen äußere Einflüsse zu schützen und den Verschmutzungsgrad während der Produktion zu minimieren.

## Patentansprüche

1. Wärmeisoliertes Leitungsrohr, bestehend aus einem Innenrohr (1) aus Kunststoff, einem Außenrohr aus Kunststoff sowie einer zwischen dem Innenrohr und dem Außenrohr befindlichen Wärmedämmschicht auf der Basis von Polyurethan oder Polyisocyanurat, bei dem das Innenrohr ein diffusionsdichtes Kunststoffrohr mit einer Aluminiumfolie (3) ist, **gekennzeichnet durch** folgende Merkmale:
a) auf der Oberfläche des Kunststoffrohres (1) befindet sich eine erste Kunststoffschicht (2),
b) über der Kunststoffschicht (2) ist die Aluminiumfolie (3) mit einer Wanddicke zwischen 30 und 50 µm angeordnet, die eine ring- oder schraubenlinienförmige Wellung aufweist, wobei die Wellung in die erste Kunststoffschicht (2) eingewellt ist,
c) über der Aluminiumfolie (3) ist eine zweite Kunststoffschicht (4) vorgesehen, welche die Wellentäler der Alumimiumfolie (3) ausfüllt.

2. Wärmeisoliertes Leitungsrohr nach Anspruch 1, **dadurch gekennzeichnet, daß** die erste Kunststoffschicht (2) aus Polyurethan besteht.

3. Wärmeisoliertes Leitungsrohr nach Anspruch 2, **dadurch gekennzeichnet, daß** das Polyurethan ein duroplastisches Polyurethan ist.

4. Wärmeisoliertes Leitungsrohr nach einem der Ansprüche 1 bis 3, **dadurch gekennzeichnet, daß** die zweite Kunststoffschicht (4) aus Polyurethan besteht.

5. Wärmeisoliertes Leitungsrohr nach Anspruch 4, **dadurch gekennzeichnet, daß** das Polyurethan ein duroplastisches Polyurethan ist.

6. Wärmeisoliertes Leitungsrohr nach einem der Ansprüche 1 bis 5, **dadurch gekennzeichnet, daß** die erste und die zweite Kunststoffschicht (2,4) ausgehärtet sind.

7. Wärmeisoliertes Leitungsrohr nach einem der Ansprüche 1 bis 6, **dadurch gekennzeichnet, daß** das Kunststoffrohr (1) ein vernetztes Polyethylenrohr ist.

8. Wärmeisoliertes Leitungsrohr nach einem der Ansprüche 1 bis 7, **dadurch gekennzeichnet, daß** die Metallfolie (3) längseinlaufend vorzugsweise mit überlappenden Bandkanten aufgebracht ist.

9. Wärmeisoliertes Leitungsrohr nach einen der Ansprüche 1 bis 8, **dadurch gekennzeichnet, daß** über der zweiten Kunststoffschicht (4) eine Folie (5) aus Polyester angeordnet ist.

10. Verfahren zur Herstellung eines diffusionsdichten Kunststoffrohres für ein wärmeisoliertes Leitungsrohr nach einem der Ansprüche 1 bis 9, **gekennzeichnet durch** folgende Merkmale:
- auf ein Kunststoffrohr (1) wird eine erste Kunststoffschicht (2) aufgetragen,
- auf die erste Kunststoffschicht (2) wird eine Aluminiumfolie (3) mit einer Wanddicke zwischen 30 und 50 µm aufgelegt,
- in die Aluminiumfolie (3) werden eine Vielzahl von ring- oder schraubenlinienförmig verlaufenden Wellen eingeformt, wobei die Wellen in die erste Kunststoffschicht (2) eindringen,
- auf die gewellte Aluminiumfolie (3) wird eine zweite Kunststoffschicht (4) aufgetragen, welche die nach außen weisenden Wellentäler ausfüllt.

11. Verfahren nach Anspruch 10, **dadurch gekennzeichnet, daß** beim Aufbringen der Wellen die erste Kunststoffschicht (2) und/oder die Aluminiumfolie (3) erwärmt werden.

12. Verfahren nach Anspruch 10 oder 11, **dadurch gekennzeichnet, daß** die Aluminiumfolie (3) längseinlaufend auf die erste Kunststoffschicht (2) aufgelegt wird.

13. Verfahren nach Anspruch 12, **dadurch gekennzeichnet, daß** die Aluminiumfolie (3) mit überlappenden Bandkanten auf die erste Kunststoffschicht (2) aufgelegt wird.

14. Verfahren nach Anspruch 14 oder 15, **dadurch gekennzeichnet, daß** die Bandkanten der Aluminiumfolie (3) miteinander verklebt sind.

15. Verfahren nach einem der Ansprüche 10 bis 14, **dadurch gekennzeichnet, daß** die Aluminiumfolie (3) eine Dehnfähigkeit von mindestens 10 % vorzugsweise mindestens 20 % aufweist.

16. Verfahren zur Herstellung eines diffusionsdichten Kunststoffrohres für ein wärmeisoliertes Leitungsrohr nach einem der Ansprüche 1 bis 9, **gekennzeichnet durch** folgende Merkmale:
- auf ein Kunststoffrohr (1) wird eine erste Kunststoffschicht (2) aufgetragen, welche radial nach außen weisende Vorsprünge aufweist,
- auf die erste Kunststoffschicht (2) wird eine Aluminiumfolie (3) aufgelegt,
- auf die Aluminiumfolie (3) wird eine zweite Kunststoffschicht (4) aufgetragen
- die Aluminiumfolie (3) wird in die zwischen den Vorsprüngen befindlichen Senken eingeformt.

17. Verfahren nach Anspruch 16, **dadurch gekennzeichnet, daß** die Aluminiumfolie (3) beim Auftragen der zweiten Kunststoffschicht (4) in die Vorsprünge eingeformt wird.

18. Verfahren nach Anspruch 16, **dadurch gekennzeichnet, daß** auf die zweite Kunststoffschicht (4) ein radial nach innen wirkender Druck aufgebracht wird.

19. Verfahren nach Anspruch 16, **dadurch gekennzeichnet, daß** auf die um die erste Kunststoffschicht (2) gelegte Aluminiumfolie (3) ein radial nach innen wirkender Druck aufgebracht wird.

20. Verfahren nach einem der Ansprüche 16 bis 19, **dadurch gekennzeichnet, daß** die erste Kunststoffschicht (2) in Form von in sich geschlossenen Ringen auf das Kunststoffrohr (1) aufgetragen wird.

## Claims

1. A Thermally-insulated conduit consisting of an inner pipe (1) made of plastic, an outer pipe made of plastic, and a polyurethane or polyisocyanurate-based thermal insulation layer between the inner pipe and outer pipe, whereby the inner pipe is a diffusion-tight plastic pipe with an aluminum foil (3), **characterized by** the following features:
a) a first plastic layer (2) is on the surface of the plastic pipe (1),
b) the aluminum foil (3) is placed on top of the plastic layer (2) with a wall thickness between 30 to 50 µm and an annular or helical corrugation, whereby the corrugation is formed in the first plastic layer (2)
c) on top of the aluminum foil (3) is a second plastic layer (4) that fills in the troughs of the corrugation of the aluminum foil (3).

2. Thermally-insulated conduit according to Claim 1, **characterized in that** the first plastic layer (2) consists of polyurethane.

3. Thermally-insulated conduit according to Claim 2, **characterized in that** the polyurethane is a duroplastic polyurethane.

4. Thermally-insulated conduit according to one of claims 1 to 3, **characterized in that** the second plastic layer (4) consists of polyurethane.

5. Thermally-insulated conduit according to claim 4, **characterized in that** the polyurethane is a duroplastic polyurethane.

6. Thermally-insulated conduit according to one of claims 1 to 5, **characterized in that** first and second plastic layers (2, 4) are hardened.

7. Thermally-insulated conduit according to one of claims 1 to 6, **characterized in that** the plastic pipe (1) is a cross-linked polyethylene pipe.

8. Thermally-insulated conduit according to one of claims 1 to 7, **characterized in that** the metal foil (3) is applied lengthwise preferably with overlapping strip edges.

9. Thermally-insulated conduit according to one of claims 1 to 8, **characterized in that** a film (5) of polyester is on the second plastic layer (4).

10. Method to manufacture a diffusion-tight plastic pipe for a thermally-insulated conduit according to one of claims 1 to 9, **characterized by** the following features:
- a first plastic layer (2) is applied to a plastic pipe (1),
- an aluminum foil (3) with a wall thickness between 30 and 50 µm is applied to the first plastic layer (2),
- a plurality of annular or helical corrugations are shaped in the aluminum foil (3), and the corrugations penetrate the first plastic layer (2),
- a second plastic layer (4) is applied to the corrugated aluminum foil (3) that fills in the outward-facing troughs of the corrugation.

11. Method according to claim 10, **characterized in that** the first plastic layer (2) and/or the aluminum foil (3) are heated when the corrugation is applied.

12. Method according to claim 10 or 11, **characterized in that** the aluminum foil (3) is applied lengthwise on the first plastic layer (2).

13. Method according to claim 12, **characterized in that** the aluminum foil (3) is applied to the first plastic layer (2) with overlapping strip edges.

14. Method according to claim 14 or 15, **characterized in that** the strip edges of the aluminum foil (3) are adhered to each other.

15. Method according to one of claims 10 to 14, **characterized in that** the expansibility of the aluminum foil (3) is at least 10% and preferably at least 20%.

16. Method to manufacture a diffusion-tight plastic pipe for a thermally-insulated conduit according to one of claims 1 to 9, **characterized by** the following features:
- a first plastic layer (2) is applied to a plastic pipe (1), and the layer has projections extending radially outward,
- an aluminum foil (3) is applied to the first plastic layer (2),
- a second plastic layer (4) is applied to the aluminum foil (3)
- the aluminum foil (3) is molded into the troughs between the projections.

17. Method according to claim 16, **characterized in that** the aluminum foil (3) is molded into the projections when the second plastic layer (4) is applied.

18. Method according to claim 16, **characterized in that** pressure directed radially inward is applied to the second plastic layer (4).

19. Method according to claim 16, **characterized in that** a pressure directed radially inward is applied to the aluminum foil (3) on the first plastic layer (2).

20. Method according to one of claims 16 to 19, **characterized in that** the first plastic layer (2) is applied on the plastic pipe (1) in the form of closed rings.

## Revendications

1. Conduit thermo-isolé, constitué d'un tube intérieur (1) en matière plastique, d'un tube extérieur en matière plastique, ainsi que d'une couche thermo-isolante se trouvant entre le tube intérieur et le tube extérieur, à base de polyuréthanne ou de polyisocyanurate, dans lequel le tube intérieur est un tube en matière plastique étanche à la diffusion muni d'une feuille d'aluminium (3), **caractérisé par** ce qui suit :
a) sur la surface du tube (1) en matière plastique se trouve une première couche de matière plastique (2),
b) sur la couche de matière plastique (2) est disposée la feuille d'aluminium (3) ayant une épaisseur de paroi comprise entre 30 et 50 µm et présentant une ondulation annulaire ou hélicoïdale, l'ondulation étant insérée dans la première couche de matière plastique (2),
c) sur la feuille d'aluminium (3) est prévue une deuxième couche de matière plastique (4), laquelle remplit les creux d'ondulation de la feuille d'aluminium (3).

2. Conduit thermo-isolé selon la revendication 1, **caractérisé en ce que** la première couche de matière plastique (2) est en polyuréthanne.

3. Conduit thermo-isolé selon la revendication 2, **caractérisé en ce que** le polyuréthanne est un polyuréthanne thermodurcissable.

4. Conduit thermo-isolé selon l'une quelconque des revendications 1 à 3, **caractérisé en ce que** la deuxième couche de matière plastique (4) est en polyuréthanne.

5. Conduit thermo-isolé selon la revendication 4, **caractérisé en ce que** le polyuréthanne est un polyuréthanne thermodurcissable.

6. Conduit thermo-isolé selon l'une quelconque des revendications 1 à 5, **caractérisé en ce que** la première et la deuxième couches de matière plastique (2, 4) sont durcies.

7. Conduit thermo-isolé selon l'une quelconque des revendications 1 à 6, **caractérisé en ce que** le tube en matière plastique (1) est un tube en polyéthylène réticulé.

8. Conduit thermo-isolé selon l'une quelconque des revendications 1 à 7, **caractérisé en ce que** la feuille métallique (3) est appliquée en étant introduite longitudinalement, de préférence avec des bords de bande se chevauchant.

9. Conduit thermo-isolé selon l'une quelconque des revendications 1 à 8, **caractérisé en ce qu'**une feuille (5) en polyester est disposée sur la deuxième couche de matière plastique (4).

10. Procédé de fabrication d'un tube en matière plastique étanche à la diffusion pour un conduit thermo-isolé, selon l'une quelconque des revendications 1 à 9, **caractérisé par** ce qui suit :
- une première couche de matière plastique (2) est appliquée sur un tube en matière plastique (1),
- sur la première couche de matière plastique (2) est posée une feuille d'aluminium (3) ayant une épaisseur de paroi comprise entre 30 et 50 µm,
- plusieurs ondulations s'étendant de manière annulaire ou hélicoïdale sont moulées dans la feuille d'aluminium (3), les ondulations pénétrant dans la première couche de matière plastique (2),
- sur la feuille d'aluminium (3) ondulée est appliquée une deuxième couche de matière plastique (4), laquelle remplit les creux d'ondulation tournés vers l'extérieur.

11. Procédé selon la revendication 10, **caractérisé en ce que** la première couche de matière plastique (2) et/ou la feuille d'aluminium (3) sont échauffées lors de l'application des ondulations.

12. Procédé selon la revendication 10 ou 11, **caractérisé en ce que** la feuille d'aluminium (3) est posée sur la première couche de matière plastique (2) en étant introduite longitudinalement.

13. Procédé selon la revendication 12, **caractérisé en ce que** la feuille d'aluminium (3) est posée sur la première couche de matière plastique (2) avec des bords de bande se chevauchant.

14. Procédé selon la revendication 14 ou 15, **caractérisé en ce que** les bords de bande de la feuille d'aluminium (3) sont collés entre eux.

15. Procédé selon l'une quelconque des revendications 10 à 14, **caractérisé en ce que** la feuille d'aluminium (3) présente une extensibilité d'au moins 10%, de préférence d'au moins 20%.

16. Procédé de fabrication d'un tube en matière plastique résistant à la diffusion pour un conduit thermo-isolé, selon l'une quelconque des revendications 1 à 9, **caractérisé par** ce qui suit :
- une première couche de matière plastique (2) est appliquée sur un tube en matière plastique (1), laquelle présente des saillies tournées vers l'extérieur en direction radiale,
- sur la première couche de matière plastique (2) est posée une feuille d'aluminium (3),
- sur la feuille d'aluminium (3) est appliquée une deuxième couche de matière plastique (4),
- la feuille d'aluminium (3) est moulée dans les creux se trouvant entre les saillies.

17. Procédé selon la revendication 16, **caractérisé en ce que** la feuille d'aluminium (3) est moulée dans les saillies lors de l'application de la deuxième couche de matière plastique (4).

18. Procédé selon la revendication 16, **caractérisé en ce qu'**une pression agissant vers l'intérieur en direction radiale est appliquée sur la deuxième couche de matière plastique (4).

19. Procédé selon la revendication 16, **caractérisé en ce qu'**une pression agissant vers l'intérieur en direction radiale est appliquée sur la feuille d'aluminium (3) posée autour de la première couche de matière plastique (2).

20. Procédé selon l'une quelconque des revendications 16 à 19, **caractérisé en ce que** la première couche de matière plastique (2) est appliquée sur le tube en matière plastique (1) sous forme d'anneaux fermés sur eux-mêmes.
